# EUROPEAN PATENT APPLICATION

(11) **EP 2 071 900 A2**
(43) Date of publication of application: **17.06.2009**
(21) Application number: 08380335.3
(22) Date of filing: 12.12.2008
(51) Int. Cl.: H05B 3/26

(54) **Dry heat radiator**

(30) Priority: 12.12.2007 ES 200702561 U
(71) Applicant: Romero Perez, José, 09200 Miranda de Ebro (Burgos) (ES)
(72) Inventor: Romero Perez, José, 09200 Miranda de Ebro (Burgos) (ES)
(74) Representative: Carvajal y Urquijo, Isabel

(57) **Abstract**

Dry heat radiator comprising at least: a first electric conductor plate (1), a second thermal conductor plate (2) and a third thermal conductor plate (3), wherein said first plate (1) is located between the second (2) and third (3) plate, in a sandwich-like manner, in such a way that the first plate (1) is electrically connected, heating up and transmitting said heat to the second (2) and third (3) plates, which irradiate said heat to the entire radiator.

## Description

### Object of the invention

The object of the present invention is a dry heat radiator, which comprises a plurality of plates of steatite stones or alike, and at least one electric conductor plate, so that this plate acts as an electric resistor, dissipating the heat irradiated by the steatite stones or alike.

### Background of the invention

Dry heat radiators have, so far, been based on a complete radiator made of stone or concrete, as described in ES2074781T3, which describes one monolithic body made of concrete which acts as a dry heat flat radiator.

The document U200100863 describes a perfected heat radiator, with a natural stone body and a plurality of grooves and ducts, fitted out in such a way as to facilitate its aesthetic decoration and placing, but being said radiator always a radiator based on only one piece of natural stone.

### Description of the invention

It is the object of the present invention to disclose a dry heat radiator in order to reduce or, where appropriate, eliminate the above mentioned problems. Said radiator comprises at least, a first electric conductor plate, a second thermal conductor plate and a third thermal conductor plate, wherein said first plate is located between the second and third plate, in a sandwich-like manner, in such a way that the first plate is electrically connected, heating up and transmitting said heat to the second and third plates, which irradiate said heat.

The unit formed by the three above mentioned plates is inserted inside the body of the radiator.

The second and third plates are built preferably using steatite, given the characteristics of thermal conductivity of such material.

### Brief description of the drawings

A non-limiting embodiment of the invention will be now described, by way of a non-limiting example with reference to the accompanying drawings so as to help understand the invention better:

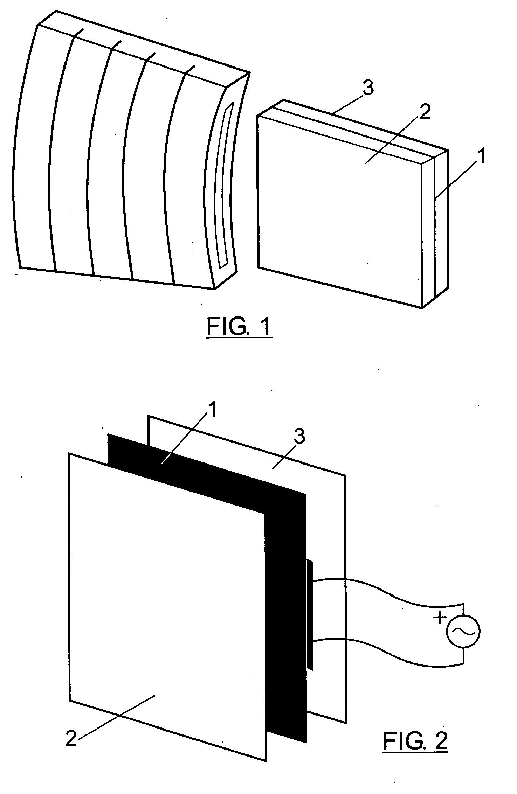

- Figure 1 shows a perspective view of the radiator object of the invention of this patent.
- Figure 2 shows a perspective and isolated view of the set of plates that form the radiator which is the object of the present invention.

### Description of the preferred embodiment of the invention

As it can be seen in the accompanying drawings, the dry heat radiator, which is the object of the present invention, comprises at least, a first electric conductor plate (1), a second thermal conductor plate (2) and a third thermal conductor plate (3), wherein said first plate (1) is located between the second (2) and third (3) plate, in a sandwich-like manner, in such a way that the first plate (1) is electrically connected, heating up and transmitting said heat to the second (2) and third (3) plates, which irradiate said heat to the entire radiator. The unit formed by the three aforementioned plates is inserted inside the radiator body.

## Claims

1. Dry heat radiator, **characterized by** comprising at least, a first electric conductor plate (1), a second thermal conductor plate (2) and a third thermal conductor plate (3).

2. Dry heat radiator according to claim 1, **characterized in that** said first plate (1) is located between the second (2) and third (3) plates, in a sandwich-like manner, in such a way that the first plate (1) is electrically connected, heating up and transmitting said heat to the second (2) and third (3) plates, which irradiate said heat to the entire radiator.

3. Dry heat radiator according to any of the preceding claims, **characterized in that** the unit formed by the first (1), second (2) and third (3) plates is inserted inside the body of the radiator.

4. Dry heat radiator according to any of the preceding claims, **characterized in that** the second (2) and third (3) plates are made of steatite.
